# EUROPÄISCHE PATENTSCHRIFT

(11) **EP 0 591 731 B1**
(45) Veröffentlichungstag und Bekanntmachung des Hinweises auf die Patenterteilung: **21.01.1998**
(21) Anmeldenummer: 93114906.6
(22) Anmeldetag: 16.09.1993
(51) Int. Cl.: C08K 5/20, C08L 77/00

(54) **Fliessfähige Polyamidformmassen**
Flowable polyamide mouldings
Masses à mouler en polyamide fluides

(30) Priorität: 24.09.1992 DE 4231928
(43) Veröffentlichungstag der Anmeldung: 13.04.1994
(73) Patentinhaber: BASF Aktiengesellschaft, 67063 Ludwigshafen (DE)
(72) Erfinder: Goetz, Walter, Dr., D-6700 Ludwigshafen (DE); Fisch, Herbert, Dr., D-6706 Wachenheim (DE); Muehlbach, Klaus, Dr., D-6718 Gruenstadt (DE)

(56) Entgegenhaltungen:
- WO-A-88/02763
- DE-A- 3 529 788
- FR-A- 1 207 810
- US-A- 3 342 762
- US-A- 3 801 521

## Beschreibung

Die Erfindung betrifft thermoplastische Formmassen, enthaltend

| | | |
|---|---|---|
| A) | 35-98,9 Gew.-% | mindestens eines Polyamids mit einem Schmelzpunkt ≥ 250°C |
| B) | 1-40 Gew.-% | eines schlagzähmodifizierenden Kautschuks |
| C) | 0,1 bis 3 Gew.-% | mindestens eines Amids aus einer gesättigten oder ungesättigten aliphatischen Carbonsäure mit 10 bis 40 C-Atomen mit einem aliphatischen Amin mit 2 bis 30 C-Atomen |
| D) | 0 bis 60 Gew.-% | faser- oder teilchenförmige Füllstoffe oder deren Mischungen, |
| E) | 0 bis 10 Gew.-% | üblicher Zusatzstoffe in wirksamen Mengen. |

Weiterhin betrifft die Erfindung die Verwendung derartiger Formmassen zur Herstellung von Fasern, Folien und Formkörpern sowie die aus den erfindungsgemäßen Formmassen erhältlichen Formkörper und Verfahren zur Herstellung dieser Formmassen.

Polyamide werden in vielen Bereichen verwendet, z. B. im Automobilbereich, zur Herstellung von Gehäusen für Elektrogeräte oder auf dem Bausektor.

Zur besseren Verarbeitung werden Polyamide daher meist mit Schmiermittelzusätzen verarbeitet. Diese können bei der Verarbeitung im Extruder - bei der Konfektionierung - zugegeben werden oder nachträglich aufgebracht werden.

Durch den Zusatz von Schmiermitteln soll ein besseres Fließen der Polyamidschmelze gewährleistet werden (besseres Wandgleiten in der Spritzgußmaschine, wodurch ein geringerer Druck zum Fällen der Spritzgußform ausreicht) sowie eine leichtere Entformung des Spritzgußformkörpers (d.h. verringertes Formkleben und damit geringere Zykluszeiten).

Aus der EP-A 280 221 ist bekannt, auf ein Polyamidgranulat nachträglich Schmiermittel aufzubringen (sog. Außenschmierung). Diese Schmiermittel bestehen aus einer Kombination von Metallsalzen und Estern von Fettsäuren, insbesondere Stearinsäure.

Aus der DE-A 2 349 835 sind füllstoffhaltige Polyamidformmassen bekannt, welche Metallsalze langkettiger Carbonsäuren als Schmiermittel enthalten, die bei der Konfektionierung eingearbeitet werden (sog. Innenschmierung). Bei hohen Verarbeitungstemperaturen führen diese zu einem Molekulargewichtsabbau des Polyamids und Zähigkeitsverlust.

Schmiermittel wie Polytetrafluorethylen, Molybdänsulfid oder Graphit (s. GB-A 1 082 686) weisen Preisnachteile, hohe Toxizität oder zu dunkle Eigenfarbe auf.

Aus der EP-A 331 001 ist der Zusatz von Polyetherestern in Polyamidformmassen bekannt. Für Polyamide mit einem hohen Schmelzpunkt ist dieser Zusatz nicht möglich, da z. B. bei der Extruderverarbeitung das Additiv sich zersetzt.

Aus der EP 413 258 ist der Zusatz von Polyetherestern mit Aluminiumsalzen oder Aluminiumoxid bekannt. Neben einem Molekulargewichtsabbau durch die Aluminiumsalze führen Polyetherester zu einer Abnahme der UV-Beständigkeit der Polyamide. Zusätzlich sind diese Zusätze sehr kostenintensiv. In der DE-A 40 39 420 wird ein Verfahren zur Herstellung von leichtfließenden Polyamidformmassen vorgeschlagen, wobei Polyetherester mit Polyamidpräpolymeren in fester Phase nachkondensiert werden.

Aus der EP-A 480 228 sind Dialkylketone als Verarbeitungshilfsmittel für Polyamide bekannt. Nachteil dieser Additive ist ihre Neigung zum Ausschwitzen bei hohen Verarbeitungstemperaturen, was zu einer Belagbildung in der Form und Oberflächendefekten des Formkörpers führen kann.

In der jüngeren Anmeldung DE-A 41 31 986 werden Aluminiumhydroxid und Ester/Amide von aliphatischen Carbonsäuren mit Alkoholen bzw. Aminen für unverstärkte Polyamide vorgeschlagen.

Aufgabe der vorliegenden Erfindung war es daher, thermoplastische Polyamidformmassen mit hohem Schmelzpunkt zur Verfügung zu stellen, die die vorstehend geschilderten Nachteile nicht aufweisen und die sich durch gute Fleißfähigkeit und erhöhte Verarbeitungsstabilität auszeichnen. Gleichzeitig sollen die guten mechanischen Eigenschaften (insbesondere die Zähigkeit) erhalten bleiben u.z. unabhängig von der Art der Verarbeitung der Anwesenheit sonstiger Zusatzstoffe (z.B. Faserverstärkung) in den Formmassen.

Demgemäß wurden die eingangs definierten Formmassen gefunden. Bevorzugte Massen dieser Art und ihre Verwendung sind den Unteransprüchen zu entnehmen.

Weiterhin wurden Verfahren zur Herstellung dieser thermoplastischen Formmassen gefunden.

Als Komponente A) enthalten die erfindungsgemäßen thermoplastischen Formmassen 35 bis 98,9 Gew.-%, vorzugsweise 50 bis 97 und insbesondere 60 bis 94 Gew.-% mindestens eines Polyamids mit einem Schmelzpunkt ≥ 250°C, bevorzugt ≥ 280°C.

Es können sowohl thermoplastische teilkristalline als auch amorphe Polyamide eingesetzt werden.

Als Komponente A) eignen sich besonders teilaromatische Copolyamide, die im wesentlichen aufgebaut sind aus
A₁) 20 - 90 Gew.-% Einheiten, die sich von Terephthalsäure und Hexamethylendiamin ableiten,
A₂) 0 - 50 Gew.-% Einheiten, die sich von E-Caprolactam ableiten und
A₃) 0 - 80 Gew.-% Einheiten, die sich von Adipinsäure und Hexamethylendiamin ableiten,
A₄) 0 - 40 Gew.-% weiteren polyamidbildenden Monomeren,
wobei der Anteil der Komponente (A₂) oder (A₃) oder (A₄) oder deren Mischungen mindestens 10 Gew.-% beträgt.

Die Komponente A₁) enthält 20 - 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte X₁ bis X₅ festgelegten Fünfecks liegt, wobei die Punkte X1 bis X5 folgendermaßen definiert sind:
- X₁: 40 Gew.-% Einheiten A₁)
60 Gew.-% Einheiten A₃)
- X₂: 60 Gew.-% Einheiten A₁)
40 Gew.-% Einheiten A₃)
- X₃: 80 Gew.-% Einheiten A₁)
5 Gew.-% Einheiten A₂)
15 Gew.-% Einheiten A₃)
- X₄: 80 Gew.-% Einheiten A₁)
20 Gew.-% Einheiten A₂)
- X₅: 50 Gew.-% Einheiten A₁)
50 Gew.-% Einheiten A₂)

In der Figur ist das durch diese Punkte festgelegte Fünfeck in einem Dreistoffdiagramm dargestellt.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten A₁) und 20 bis 50, vorzugsweise 25 bis 40 Gew.-% Einheiten, die sich von ε-Caprolactam ableiten (Einheiten A₂)) enthalten, erwiesen.

Neben den vorstehend beschriebenen Einheiten A₁) bis A₃) können die teilaromatischen Copolyamide in Mengen bis 40, vorzugsweise 10 - 30 Gew.-% und insbesondere 20 - 30 Gew.-% an weiteren polyamidbildenden Monomeren A₄) enthalten; wie sie von anderen Polyamiden bekannt sind.

Aromatische Dicarbonsäuren A₄) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z.B. 4,4'-und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure, Phenoxyterephthalsäure, wobei Isophtalsäure besonders bevorzugt sind.

Weitere polyamidbildende Monomere A₄) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, w-Aminoundecansäure und Laurinlactam als Vertreter von Lactamen bzw. Aminocarbonsäuren genannt.

Hierbei sind folgende Zusammensetzungen der Komponente (A) besonders bevorzugt:
A₁) 65 bis 85 Gew.-% Einheiten, die sich von Terephthalsäure und Hexamethylendiamin ableiten und
A₄) 15 bis 35 Gew.-% Einheiten, die sich von Isophthalsäure und Hexamethylendiamin ableiten
   oder
A₁) 50 bis 70 Gew.-% Einheiten, die sich von Terephthalsäure und Hexamethylendiamin ableiten und
A₃) 10 bis 20 Gew.-% Einheiten, die sich von Adipinsäure und Hexamethylendiamin ableiten und
A₄) 20 bis 30 Gew.-% Einheiten, die sich von Isophthalsäure und Hexamethylendiamin ableiten

Enthält die Komponente (A₄) symmetrische Dicarbonsäuren, bei denen die Carboxylgruppen in para-Stellung stehen, so empfiehlt es sich, diese mit(A₁) und (A₂) oder (A₁) und (A₃) als ternäre Copolyamide aufzubauen, da andernfalls das Copolyamid einen zu hohen Schmelzpunkt aufweist und nur unter Zersetzung schmilzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270°C bis 325°C, bevorzugt von 280 bis 310°C, wobei dieser hohe Schmelzpunkt auch mit einer hohen Glasübergangstemperatur von in der Regel mehr als 75, insbesondere mehr als 85°C (im trockenen Zustand) verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und (im trockenen Zustand) eine Glasübergangstemperatur von mehr als 110°C auf.

Binäre Copolyamide auf der Basis von Terephthalsäure, Adipinsäure und Hexamethylendiamin erreichen bereits bei niedrigeren Gehalten von etwa 55 Gew.-% Einheiten aus Terephthalsäure und Hexamethylendiamin (HMD) Schmelzpunkte von 300°C und mehr, wobei die Glastemperatur nicht ganz so hoch liegt wie bei binären Copolyamiden, die anstelle von Adipinsäure bzw. Adipinsäure/HMD ε-Caprolactam enthalten.

Die Herstellung der bevorzugten teilaromatischen Copolyamide mit niedrigem Triamingehalt kann nach den in den EP-A 129 195 und 129 196 beschriebenen Verfahren erfolgen.

Weitere geeignete Polyamide können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von ω-Aminocarbonsäuren oder Polyaddition von Lactamen hergestellt werden.

In der Regel sind diese teilkristallinen Polyamide linear.

Besonders bevorzugt sind Polytetramethylenadipinsäureamid und Polyhexamethylenadipinsäureamid.

Diese Polyamide weisen im allgemeinen eine relative Viskosität von 2,0 bis 5 auf, bestimmt in einer 1 vol.-%igen Lösung von 96 gew.-%iger Schwefelsäure bei 23°C, was einem Molekulargewicht (Gewichtsmittelwert) von etwa 104 bis 5,104 entspricht.

Polyamide mit einer relativen Viskosität von 2,4 bis 4,5, insbesondere von 2,5 bis 3,5, werden bevorzugt verwendet.

Als Komponente A) können auch Mischungen verschiedener Polyamide eingesetzt werden.

Als Komponente B) enthalten die erfindungsgemäßen thermoplastischen Formmassen 1 bis 40, vorzugsweise 1 bis 15 und insbesondere 4 bis 10 Gew.-%, eines kautschukelastischen Polymerisats.

Im allgemeinen handelt es sich dabei um Copolymerisate, die bevorzugt aus mindestens zwei der folgenden Monomeren als Hauptkomponenten aufgebaut sind: Ethylen, Propylen, Isobuten, Isopren, Chloropren, Vinylacetat, Styrol, Acrylnitril und Acryl- und Methacrylsäureestern mit 1 bis 18 C-Atomen in der Alkoholkomponente.

Kautschuke dieser Art sind z.B. im Houben-Weyl, Methoden der organischen Chemie, Bd. 14/1 (Thieme-Verlag, Stuttgart, 1961), Seiten 392 bis 406 und in der Monographie von C.B. Bucknall, "Toughened Plastic" (Applied Science Publishers, London, 1977) beschrieben.

Bevorzugte Arten von solchen Elastomeren sind die sog. Ethylen-Propylen (EPM) bzw. Ethylen-Propylen-Dien-(EPDM)-Kautschuke, die vorzugsweise ein Verhältnis von Ethyleneinheiten zu Propyleneinheiten im Bereich von 40:60 bis 90:10 aufweisen.

Die Mooney-Viskositäten (MLI+4/100°C) solcher unvernetzten EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyc1o(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxy-gruppen enthaltende Monomere werden vorzugsweise durch Zugabe von Dicarbonsäure- bzw. Epoxygruppen enthaltenden Monomeren der allgemeinen Formeln II oder III oder IV oder V zum Monomerengemisch in den Kautschuk eingebaut

R₁C(COOR₂)=C(COOR₃)R₄ II

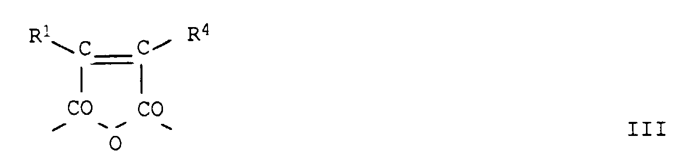

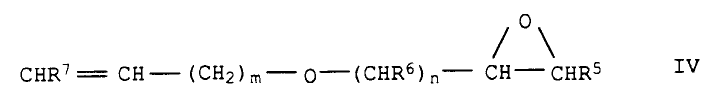

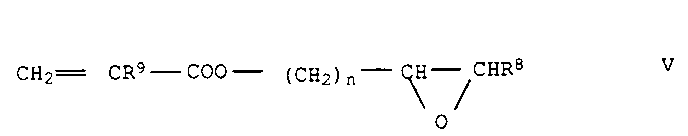

wobei R1 bis R9 Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Vorzugsweise bedeuten die Reste R1 bis R7 Wasserstoff, wobei m für 0 oder 1 und n für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln II, III und V sind Maleinsäure, Maleinsäureanhydrid und Epoxygruppen-enthaltende Ester der Acrylsäure und/oder Methacrylsäure, wobei Glycidylacrylat, Glycidylmethacrylat und die Ester mit tertiären Alkoholen, wie t-Butylacrylat besonders bevorzugt werden. Letztere weisen zwar keine freien Carboxylgruppen auf, kommen in ihrem Verhalten aber den freien Säuren nahe und werden deshalb als Monomere mit latenten Carboxylgruppen bezeichnet.

Der Ethylengehalt der Copolymeren liegt im allgemeinen im Bereich von 50 bis 98 Gew.-%, und der Anteil an Methacrylsäureestern zwischen 2 und 50 Gew.-%. Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an Methacrylsäureestern.

Besonders bevorzugt sind Copolymerisate aus

| | |
|---|---|
| 50 bis 98,9, | insbesondere 60 bis 95 Gew.-% Ethylen, |
| 0,1 bis 40, | insbesondere 0,3 bis 20 Gew.-% Glycidylacrylat und/oder Glycidylmethacrylat, Acrylsäure und/oder Maleinsäureanhydrid, und |
| 1 bis 45, | insbesondere 10 bis 35 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Der Schmelzindex der Ethylencopolymeren liegt im allgemeinen im Bereich von 1 bis 80 g/10 min (gemessen bei 190'C und 2,16 kg Belastung).

Weitere bevorzugte Elastomere B) sind Emulsionspolymerisate, deren Herstellung z.B. in Houben-Weyl, Methoden der organischen Chemie, Band XII. I (1961) sowie bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung der Elastomeren Acrylate wie z.B. n-Butylacrylat und 2-Ethylhexylacrylat und die entsprechenden Methacrylate sowie deren Mischungen genannt. Diese Monomeren können mit weiteren Monomeren wie z.B. Styrol, Acrylnitril, Vinylethern und weiteren Acrylaten oder Methacrylaten wie Ethylacrylat, Propylacrylat, Methylmethacrylat und Methylacrylat copolymerisiert werden.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

Es ist vorteilhaft, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 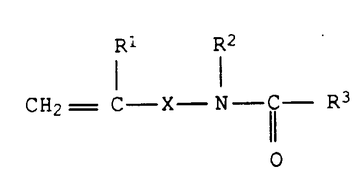 eingeführt werden können,
wobei die Substituenten folgende Bedeutung haben können:
- R1: Wasserstoff oder eine C₁- bis C₄-Alkylgruppe,
- R2: Wasserstoff, eine C₁- bis C₈-Alkylgruppe oder eine Arylgruppe, insbesondere Phenyl,
- R3: Wasserstoff, eine C₁- bis C₁₀-Alkyl-, eine C₆-C₁₂-Arylgruppe oder -OR⁴,
- R4: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆- bis C₁₂-Arylengruppe oder 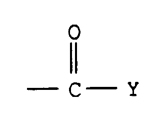
- Y: O-Z- oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Weiterhin können die Teilchen der Kautschukphase auch vernetzt sein. Als Vernetzer wirkende Monomere sind beispielsweise Divinylbenzol, Diallylphthalat und Dihydrodicyclopentodienylacrylat sowie die in der EP-A 50 265 beschriebenen Verbindungen zu nennen.

Im allgemeinen beträgt der Anteil dieser vernetzenden Monomeren an der Komponente B) bis zu 5 Gew.-%, vorzugsweise nicht mehr als 3 Gew.-%, bezogen auf B).

Selbstverständlich können auch Mischungen der vorstehend aufgeführten Kautschuktypen eingesetzt werden können.

Als Komponente C) enthalten die erfindungsgemäßen Formmassen 0,1 bis 2, vorzugsweise 0,3 bis 2 und insbesondere 0,5 bis 1 Gew.-% mindestens Amids gesättigter oder ungesättigter aliphatischer Carbonsäuren mit 10 bis 40, bevorzugt 14 bis 32 C-Atomen mit aliphatischen gesättigten Aminen mit 2 bis 30, vorzugsweise 2 bis 18 und insbesondere 2 bis 8 C-Atomen.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Palmitinsäure sowie Montansäure (Mischung von Fettsäuren mit 30 bis 40 C-Atomen) genannt.

Die aliphatischen Amine können 1- bis 3-wertig sein. Beispiele hierfür sind Stearylamin, Ethylendiamin, Propylendiamine, Hexamethylendiamin, Di(6-Aminohexyl)amin, wobei Ethylendiamin und Hexamethylendiamin besonders bevorzugt sind. Bevorzugte Amide sind entsprechend Ethylendiamindistearat und Hexamethylendiamindistearat.

Es können auch Mischungen verschiedener Amide eingesetzt werden, wobei das Mischungsverhältnis beliebig ist.

Als weiteren Bestandteil können die erfindungsgemäßen Formmassen 0 bis 60, vorzugsweise 1 bis 50, insbesondere 15 bis 35 Gew.% eines faser- oder teilchenförmigen Füllstoffes (Komponente (D)) oder deren Mischungen enthalten.

Bevorzugte faserförmige Verstärkungsstoffe (Komponente (D)) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 µm.

Als teilchenförmige Füllstoffe eignen sich amorphe Kieselsäure, Magnesiumcarbonat (Kreide), gepulverter Quarz, Glimmer, Talkum, Feldspat und insbesondere Calciumsilikate wie Wollastonit sowie Kaolin (insbesondere kalzinierter Kaolin).

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Neben den wesentlichen Komponenten A) bis C) und gegebenenfalls D) können die erfindungsgemäßen Formmassen übliche Zusatzstoffe und Verarbeitungshilfsmittel (E) enthalten. Deren Anteil beträgt im allgemeinen bis zu 10, vorzugsweise bis zu 5 Gew.%, bezogen auf das Gesamtgewicht der Komponenten (A) bis (D).

Übliche Zusatzstoffe sind beispielsweise Stabilisatoren und Oxidationsverzögerer, Mittel gegen Wärmezersetzung und Zersetzung durch ultra-violettes Licht, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, sekundäre aromatische Amine (siehe DE-A 42 06 950), substituierte Vertreter dieser Gruppe und Mischungen dieser Verbindungen, vorweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Die Herstellung der erfindungsgemäßen thermoplastischen Formmassen ist an sich nicht kritisch, jedoch haben sich einige Verfahren als besonders geeignet erwiesen.

So kann beispielsweise aus den Komponenten A) und B) sowie gegebenenfalls D) und/oder E), vorzugsweise auf einem Extruder, ein Granulat hergestellt werden. Auf dieses Granulat kann nun die Komponente C) als Pulver, Schmelze oder Lösung aufgetragen werden, wobei in einer bevorzugten Ausführungsform die Temperatur des Granulats größer ist als der Schmelzpunkt der Komponente C). Für die besonders bevorzugten Fälle der Verwendung von Ethylendiamindistearat und Hexamethylendiamindistearat als Komponente C) haben sich Granulat-Temperaturen von 120 bis 170°C als besonders geeignet erwiesen.

In einem weiteren bevorzugten Verfahren zur Herstellung der erfindungsgemäßen thermoplastischen Formmassen wird die Komponente C) zu der Schmelze der Komponente A) und B) sowie gegebenenfalls D) und/oder E) gegeben, d. h. einkonfektioniert. Hier haben sich vor allem Extruder, insbesondere Zweischneckenextruder bewährt. Andere Konfektioniereinrichtungen wie Einwellenextruder und Kneter können selbstverständlich ebenfalls eingesetzt werden. Die Verarbeitungstemperaturen liegen üblicherweise ca. 10 bis 50°C über dem Schmelzpunkt des verwendeten Polyamids (Komponente A). Bevorzugt werden die Produkte dann extrudiert und granuliert.

Die Komponente C) kann auch zur Polykondensation der Komponente A), die bevorzugt in der Schmelze ausgeführt wird, zugegeben werden. Hierbei hat sich eine anschließende Festphasenkondensation als besonders geeignet erwiesen, wonach die Produkte dann - wie bereits geschildert - mit der Komponente B) und gegebenenfalls D) und/oder E), bevorzugt extrudiert und granuliert werden.

Auch die Zugabe der Komponente C) in den Polykondensationskessel einer diskontinuierlichen Polyamidkondensation ist möglich.

Die erfindungsgemäßen thermoplastischen Formmassen zeichnen sich durch ein insgesamt ausgewogenes Eigenschaftsspektrum, insbesondere durch gute Fließfähigkeit und hohe Verarbeitungsstabilität aus. Sie eignen sich zur Herstellung von Fasern, Folien und Formkörpern.

### Beispiele

Es wurden folgende Komponenten eingesetzt:

### Komponente A/1

Ein teilaromatisches Copolyamid, aufgebaut aus
A₁) 70 Gew.-% Einheiten, die sich von Terephthalsäure und Hexamethylendiamin ableiten und
A₂) 30 Gew.-% Einheiten, die sich von ε-Caprolactam ableiten.

Die Viskositätszahl nach ISO 307 betrug 127 ml/g (gemessen in 96 gew.-%iger H₂SO₄ als 0,5 gew.-%ige Lösung bei 23°C).
Schmelzpunkt: 299 °C

### Komponente A/2

Polyamid 6 (Poly-ε-caprolactam) mit einer Viskositätszahl von 144 ml/g (Ultramid® B3 der BASF AG).
Schmelzpunkt: 221°C

### Komponente B

Ein Copolymerisat aus

| | |
|---|---|
| 60 Gew.-% | Ethylen |
| 35 Gew.-% | n-Butylacrylat |
| 5 Gew.-% | Acrylsäure |

wurde unter erhöhtem Druck und Temperatur hergestellt. Der MFI betrug: 10,5 g/10 min (190°C/2,16 kg).

### Komponente C/1

Ethylenbisstearylamid

### Komponente C/2

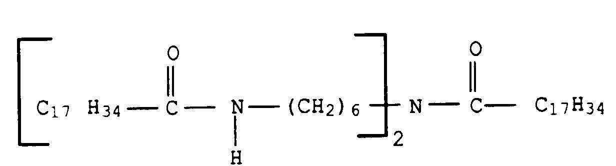

### Komponente C/3

Stearylstearat

### Komponente C/4

Calciumstearat

### Komponente C/5

Aluminiumstearat

### Komponente D

Schnitt-Glasfasern mit einem mittleren Durchmesser von 10 µm, Faserlänge 4,5 mm, Aminosilan-Schlichte

### Herstellung der Formmassen

Die Komponenten A) bis C) sowie gegebenenfalls D wurden auf einem Zweischneckenextruder bei 320°C konfektioniert, in Stränge gegossen, durch ein Wasserbad geleitet und granuliert sowie getrocknet (8 h bei 80°C im Vakuum).

Auf einer Spritzgußmaschine wurden bei 320°C Prüfkörper gespritzt.

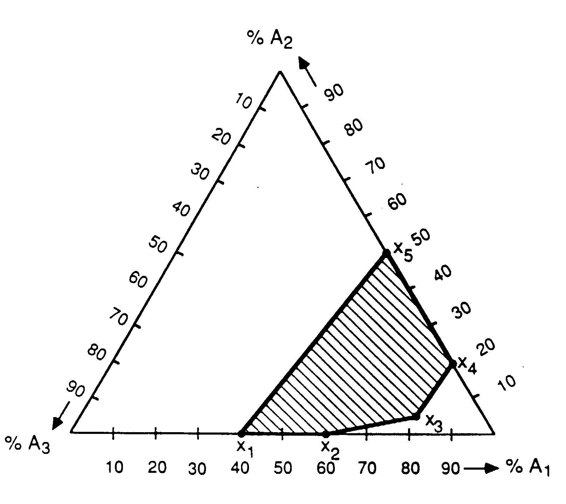

Von den Produkten wurden die Schmelzindices MFI nach DIN 53 735 bei 325°C einer Belastung von 2,16 kg nach 4 min und nach 20 min Aufheizzeit und der Fülldruck P_{Füll} (d.h. der Mindestdruck zum Füllen eines Testkästchens, vgl. Ultramid®-Broschüre der BASF S. 46, Abb. 38) gemessen.

Die Durchstoßarbeit w_{d} wurde nach DIN 53 443, die Schlagzähigkeit aₙ (nur für glasfaserhaltige Produkte) nach DIN 53 453 und die Lochkerbschlagzähigkeit aₖ₁ nach DIN 53 759 (Produkte ohne Glasfasern) bestimmt.

Die Zusammensetzung der Formmassen und ihre Eigenschaften sind der Tabelle zu entnehmen.

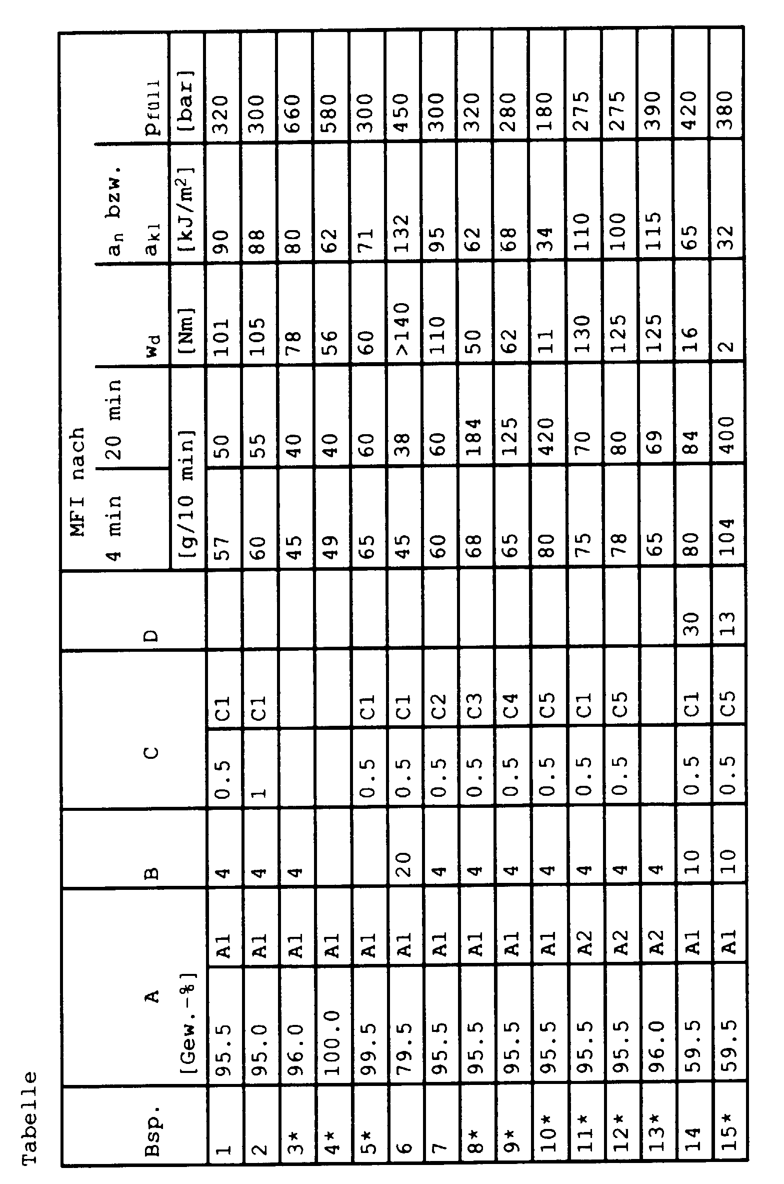

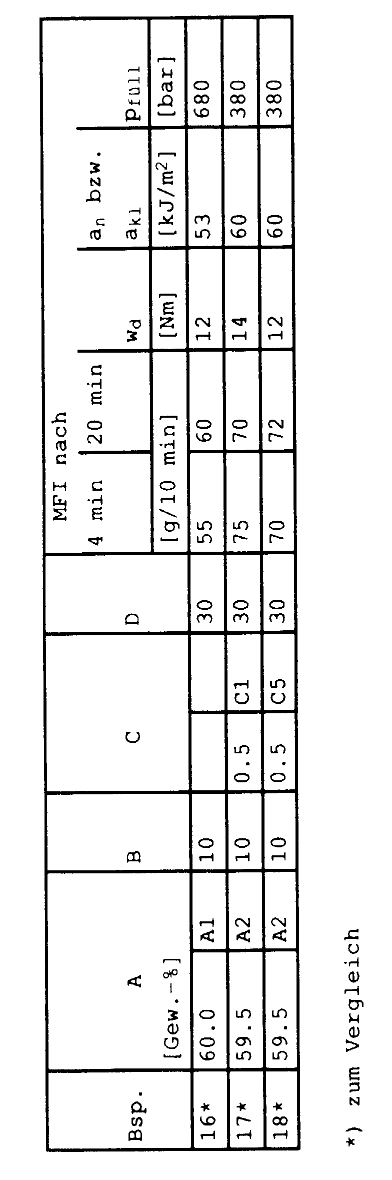

## Patentansprüche

1. Thermoplastische Formmassen, enthaltend
| | | |
|---|---|---|
| A) | 35-98,9 Gew.-% | mindestens eines Polyamids mit einem Schmelzpunkt ≥ 250°C |
| B) | 1-40 Gew.-% | eines schlagzähmodifizierenden Kautschuks |
| C) | 0,1 bis 3 Gew.-% | mindestens eines Amids aus einer gesättigten oder ungesättigten aliphatischen Carbonsäure mit 10 bis 40 C-Atomen mit einem aliphatischen Amin mit 2 bis 30 C-Atomen |
| D) | 0 bis 60 Gew.-% | faser- oder teilchenförmige Füllstoffe oder deren Mischungen, |
| E) | 0 bis 10 Gew.-% | üblicher Zusatzstoffe in wirksamen Mengen. |

2. Thermoplastische Formmassen nach Anspruch 1, enthaltend
A) 50 - 97 Gew.-%
B) 1 - 15 Gew.-%
C) 0,3 - 2 Gew.-%
D) 1 - 40 Gew.-%

3. Thermoplastische Formmassen nach den Ansprüchen 1 oder 2, in denen die Komponente A) ein Polyamid ist, welches sich aus Einheiten aus Tetramethylendiamin und Adipinsäure ableitet.

4. Thermoplastische Formmassen nach den Ansprüchen 1 bis 3 in denen die Komponente A) ein teilaromatisches Copolyamid ist, aufgebaut aus
A₁) 20 bis 90 Gew.-% Einheiten, die sich von Terephthalsäure und Hexamethylendiamin ableiten,
A₂) 0 bis 50 Gew.-% Einheiten, die sich von ε-Caprolactam ableiten und
A₃) 0 bis 80 Gew.-% Einheiten, die sich von Adipinsäure und Hexamethylendiamin ableiten,
A₄) 0 bis 40 Gew.-% weiteren polyamidbildenden Monomeren,
wobei der Anteil der Komponente (A₂) oder (A₃) oder (A₄) oder deren Mischungen mindestens 1-0 Gew.-% beträgt.

5. Thermoplastische Formmassen nach den Ansprüchen 1 bis 4, in denen als Komponente C) Ethylenbisstearylamid oder Hexamethylenbisstearylamid oder deren Mischungen eingesetzt wird.

6. Verfahren zur Herstellung der thermoplastischen Formmassen gemäß den Ansprüchen 1 bis 5, dadurch gekennzeichnet, daß die Komponente C) der Schmelze der Komponente A und B sowie gegebenenfalls D und/oder E zugegeben wird.

7. Verfahren zur Herstellung der thermoplastischen Formmassen gemäß den Ansprüchen 1 bis 5, dadurch gekennzeichnet, daß man die Komponente C) auf ein Granulat der Komponente A) und B), das gegebenenfalls die Komponenten D) und/oder E) enthält und dessen Temperatur größer ist als der Schmelzpunkt der Komponente C), aufträgt.

8. Verwendung der thermoplastischen Formmassen gemäß den Ansprüchen 1 bis 5 zur Herstellung von Fasern, Folien und Formkörpern.

9. Formkörper, erhältlich aus den thermoplastischen Formmassen gemäß den Ansprüchen 1 bis 5.

## Claims

1. A thermoplastic molding material containing
A) 35-98.9% by weight of at least one polyamide having a melting point of ≥ 250°C,
B) 1-40% by weight of a rubber impact modifier,
C) 0.1-3% by weight of at least one amide of a saturated or unsaturated aliphatic carboxylic acid of 10 to 40 carbon atoms with an aliphatic amine of 2 to 30 carbon atoms,
D) 0-60% by weight of fibrous or particulate fillers or of a mixture thereof and
E) 0-10% by weight of conventional additives in effective amounts.

2. A thermoplastic molding material as claimed in claim 1, containing
A) 50-97% by weight
B) 1-15% by weight
C) 0.3-2% by weight
D) 1-40% by weight.

3. A thermoplastic molding material as claimed in claim 1 or 2, wherein the component A) is a polyamide which is derived from units of tetramethylenediamine and adipic acid.

4. A thermoplastic molding material as claimed in any of claims 1 to 3, wherein the component A) is a partly aromatic copolyamide composed of
A₁) from 20 to 90% by weight of units which are derived from terephthalic acid and hexamethylenediamine,
A₂) from 0 to 50% by weight of units which are derived from ε-caprolactam,
A₃) from 0 to 80% by weight of units which are derived from adipic acid and hexamethylenediamine and
A₄) from 0 to 40% by weight of further polyamide-forming monomers,
the amount of component (A₂) or (A₃) or (A₄) or of a mixture thereof being at least 10% by weight.

5. A thermoplastic molding material as claimed in any of claims 1 to 4, wherein ethylenebisstearylamide or hexamethylenebisstearylamide or a mixture thereof is used as component C).

6. A process for the preparation of a thermoplastic molding material as claimed in any of claims 1 to 5, wherein the component C) is added to the melt of component A) and B) and, if required, D) and/or E).

7. A process for the preparation of a thermoplastic molding material as claimed in any of claims 1 to 5, wherein the component C) is applied to granules of components A) and B), which granules may contain the components D) and/or E) and are at a temperature which is greater than the melting point of the component C).

8. The use of a thermoplastic molding material as claimed in any of claims 1 to 5 for the production of a fiber, film or molding.

9. A molding obtainable from a thermoplastic molding material as claimed in any of claims 1 to 5.

## Revendications

1. Masses à mouler thermoplastiques, qui contiennent
| | | |
|---|---|---|
| A) | 35 à 98,9% en poids | d'au moins un polyamide possédant un point de fusion égal ou supérieur à 250°C, |
| B) | 1 à 40% en poids | d'un caoutchouc modificateur de résilience, |
| C) | 0,1 à 3% en poids | d'au moins un amide d'un acide carboxylique aliphatique saturé ou insaturé comportant de 10 à 40 atomes de carbone avec une amine aliphatique comportant de 2 à 30 atomes de carbone, |
| D) | 0 à 60% en poids | de charges fibreuses ou particulaires ou de leurs mélanges, |
| E) | 0 à 10% en poids | d'additifs habituels en proportions actives. |

2. Masses à mouler thermoplastiques suivant la revendication 1, qui contiennent
A) à raison de 50 à 97% en poids,
B) à raison de 1 à 15% en poids,
C) à raison de 0,3 à 2% en poids,
D) à raison de 1 à 40% en poids.

3. Masses à mouler thermoplastiques suivant les revendications 1 ou 2, dans lesquelles le composant A) est un polyamide qui provient d'unités de tétraméthylènediamine et d'acide adipique.

4. Masses à mouler thermoplastiques suivant les revendications 1 à 3, dans lesquelles le composant A) représente un copolyamide partiellement aromatique constitué de
A₁) 20 à 90% en poids d'unités qui proviennent de l'acide téréphtalique et de l'hexaméthylènediamine,
A₂) 0 à 50% en poids d'unités qui proviennent de l'ε-caprolactame et
A₃) 0 à 80% en poids d'unités qui proviennent de l'acide adipique et de l'hexaméthylènediamine,
A₄) 0 à 40% en poids d'autres monomères polyamidogènes, où la proportion des composants A₂) ou A₃) ou A₄) ou de leurs mélanges atteint au moins 10% en poids.

5. Masses à mouler thermoplastiques suivant l'une quelconque des revendications 1 à 4, dans lesquelles on utilise, à titre de composant C), de l'éthylènebisstéarylamide ou de l'hexaméthylènebisstéarylamide ou leurs mélanges.

6. Procédé de préparation des masses à mouler thermoplastiques suivant les revendications 1 à 5, caractérisé en ce que l'on ajoute au composant C), la masse fondue des composants A et B, comme éventuellement aussi, D et/ou E.

7. Procédé de préparation des masses à mouler thermoplastiques suivant les revendications 1 à 5, caractérisé en ce que l'on applique le composant C) sur un granulé des composants A) et B), qui contient éventuellement les composants D) et/ou E) et dont la température est supérieure au point de fusion du composant C).

8. Utilisation des masses à mouler thermoplastiques suivant les revendications 1 à 5, pour la fabrication de fibres, de feuilles et d'articles moulés.

9. Articles moulés que l'on peut obtenir à partir des masses à mouler thermoplastiques suivant les revendications 1 à 5.
